# EUROPÄISCHE PATENTANMELDUNG

(11) **EP 2 853 355 A2**
(43) Veröffentlichungstag der Anmeldung: **01.04.2015**
(21) Anmeldenummer: 14003277.2
(22) Anmeldetag: 22.09.2014
(51) Int. Cl.: B25J 9/16

(54) **Verfahren zum Betreiben eines mehrgliedrigen Manipulators**

(30) Priorität: 25.09.2013 DE 102013016019
(71) Anmelder: FESTO AG & Co. KG, 73734 Esslingen (DE)
(72) Erfinder: Doll, Matthias, D-73734 Esslingen (DE); Hartmann, Armin, D-73760 Ostfildern (DE); Neumann, Rüdiger, D-73760 Ostfildern (DE)
(74) Vertreter: Patentanwälte Magenbauer & Kollegen Partnerschaft mbB

(57) **Zusammenfassung**

Die Erfindung betrifft ein Verfahren zum Betreiben eines mehrgliedrigen Manipulators (1) mit elektrischen Aktoren (3, 4, 5) zur Einleitung von Relativbewegungen auf Manipulatorglieder (6, 7, 8, 9), wobei den Aktoren (3, 4, 5) Steuereinrichtungen (10, 11, 12) zugeordnet sind, mit den Schritten: Bereitstellen von Soll-Bewegungswerten für den Aktor (3, 4, 5) an ein Aktordynamikmodell (40) und Ermitteln eines elektrischen Sollstromwertwerts für den Aktor (3, 4, 5), Weiterleiten des Sollstromwertwerts an einen Regler (41), der unter Einbeziehung des Sollstromwertwerts sowie eines gemessenen Iststromwerts und einer gemessenen Ist-Position des Aktors (3, 4, 5) zur Ausgabe eines Aktorstroms an den Aktor (3, 4, 5) ausgebildet ist, wobei eine Differenz aus Sollstromwertwert und Iststromwert als erforderliche Positionsabweichung des Aktors (3, 4, 5) ermittelt wird, und dass die Positionsabweichung dem in das Aktordynamikmodell (40) eingespeisten Sollweg zugerechnet wird, um eine Ausweichbewegung des wenigstens eines Manipulatorglieds (6, 7, 8, 9) koordiniert für wenigstens einen Aktor (3, 4, 5) bei Auftreten einer äußeren Störkraft zu ermöglichen.

## Beschreibung

Die Erfindung betrifft ein Verfahren zum Betreiben eines mehrgliedrigen Manipulators, der wenigstens einen elektrischen Aktor zur Einleitung einer Relativbewegung auf einander benachbarte Manipulatorglieder umfasst, wobei dem wenigstens einen Aktor eine Steuereinrichtung für eine geregelte Energiezufuhr an den Aktor zugeordnet ist.

Ein mit Hilfe des Verfahrens anzusteuernder Manipulator kann beispielsweise zur Handhabung von Werkstücken oder zur Bearbeitung von Werkstücken ausgebildet sein. Üblicherweise sind Verfahren zum Betreiben mehrgliedriger Manipulatoren für die Handhabung und/oder Bearbeitung formstabiler Werkstücke ausgelegt, so dass bei einer Programmierung des Verfahrens zur Festlegung der Bewegungen des Manipulators die Geometrie des Werkstücks als konstant angenommen werden kann und als fester Bestandteil der Programmierung einbezogen wird. Demgegenüber muss bei der Programmierung eines Verfahrens zur Festlegung von Bewegungen eines Manipulators, der für die Handhabung und/oder Bearbeitung von elastischen, nicht formstabilen Werkstücken ausgebildet ist, Rücksicht auf die veränderliche Geometrie des Werkstücks genommen werden, was die Verwendung des Manipulators für solche Zwecke erheblich erschwert. Dies gilt insbesondere dann, wenn die Aktoren des Manipulators keine eigene Elastizität oder Flexibilität aufweisen, wie sie insbesondere von pneumatischen Systemen bekannt ist. Werden beispielsweise elektrische Antriebe als Aktoren für den Manipulator eingesetzt, weisen diese eine hohe mechanische Steifigkeit auf, die bei der Handhabung oder Bearbeitung von elastischen, nicht formstabilen Werkstücken zu erheblichen Problemen führen kann. Gemäß einem druckschriftlich nicht niedergelegten Stand der Technik wird versucht, die mechanische Steifigkeit der elektrischen Antriebe durch elastische Zwischenglieder und/oder durch regelungstechnische Maßnahmen zu reduzieren. Hierbei ist es erforderlich, dass die dem Manipulator zugeordneten und die räumliche Lage des Manipulators bestimmenden Aktoren mit aufwendiger Sensortechnik, beispielsweise mit Kraftsensoren und/oder Drehmomentsensoren ausgestattet sind und von einer Zentraleinheit angesteuert werden.

Die Aufgabe der Erfindung besteht darin, ein Verfahren zum Betreiben eines mehrgliedrigen Manipulators anzugeben, bei dem die mechanische Steifigkeit der elektrischen Aktoren ohne aufwändige Sensortechnik unter Verwendung einer vorteilhaften Regelung so weit reduziert werden kann, dass sich bei hoher Präzision der Positionierung zumindest nahezu ein "pneumatisches Verhalten" des Manipulators erzielen lässt.

Diese Aufgabe wird für ein Verfahren der eingangs genannten Art mit den im Anspruch 1 angeführten und nachfolgend wiedergegebenen Schritten gelöst: Bereitstellen von Soll-Bewegungswerten aus der Gruppe: Sollweg und Sollgeschwindigkeit oder Sollweg und Sollbeschleunigung oder Sollweg und Sollgeschwindigkeit und Sollbeschleunigung für den Aktor an ein Aktordynamikmodell und Ermitteln eines elektrischen Sollstromwertwerts für den Aktor im Aktordynamikmodell, um die vorgegebenen Soll-Bewegungswerte zu erreichen, Weiterleiten des Sollstromwertwerts oder des Sollstromwerts und der Soll-Bewegungswerte an einen Regler, der unter Einbeziehung des Sollstromwertwerts sowie eines gemessenen Iststromwerts und einer gemessenen Ist-Position des Aktors zur Ausgabe eines Aktorstroms an den Aktor ausgebildet ist, wobei eine Differenz zwischen dem Sollstromwert und dem Iststromwert ermittelt und in eine erforderliche Positionsabweichung des Aktors umgerechnet wird, und dass die ermittelte erforderliche Positionsabweichung dem in das Aktordynamikmodell eingespeisten Sollweg zugerechnet wird, um eine Ausweichbewegung des Greifers koordiniert für wenigstens einen Aktor bei Auftreten einer äußeren Störkraft zu ermöglichen. Exemplarisch handelt es sich bei dem Regler um einen Kaskadenregler oder um einen Zustandsregler.

Dabei werden die Soll-Bewegungswerte von einem Bahngenerator zur Verfügung gestellt, der in Kenntnis der aktuellen Ist-Position des Aktors die zur Erfüllung der gestellten Bewegungsaufgabe notwendigen Bewegungen des wenigstens einen Aktors, der die räumliche Lage des mehrgliedrigen Manipulators zumindest mitbestimmt, ermittelt. Die Sollbewegungswerte werden vom Bahngenerator an das Aktordynamikmodell zur Verfügung gestellt, bei dem es sich beispielsweise um eine elektrische Schaltung oder einen Softwaremodul handelt, mit der bzw. mit dem zu jeder räumlichen Lage des mehrgliedrigen Manipulators diejenige Kraft berechnet werden kann, die von dem wenigstens einen elektrischen Aktor bereitgestellt werden muss, um die gewünschte Relativbewegung zwischen den mit dem Aktor gekoppelten benachbarten Manipulatorgliedern hervorzurufen. Dabei werden im Aktordynamikmodell insbesondere die Anzahl, die Geometrien und die kinematischen Kopplungen der Manipulatorglieder sowie die technischen Eigenschaften der elektrischen Aktoren abgebildet. Das Aktordynamikmodell beruht insbesondere auf einer Simulation, die die vorstehend genannten Randbedingungen berücksichtigt und die für jede räumliche Lage oder Konfiguration des Manipulators sowohl einen Wert für eine Haltekraft des jeweiligen Aktors als auch für eine positive oder negative Beschleunigung der mit dem Aktor verbundenen Manipulatorglieder aus einer Wertetabelle und/oder durch Verwendung von Algorithmen bereitstellen kann. Ferner kann dem Aktordynamikmodell die Aufgabe zugeordnet werden, die ermittelte Kraft in einen Sollstromwert für den jeweiligen Aktor umzurechnen und diesen Sollstromwert an den Regler weiterzuleiten. Der Regler ist in diesem Fall dazu ausgebildet, anhand des vom Aktordynamikmodell bereitgestellten Sollstromwerts unter Einbeziehung eines tatsächlich fließenden Iststromwerts und einer gemessenen Ist-Position des Aktors eine Stromregelung für den zugeordneten Aktor vorzunehmen, um innerhalb eines vorgebbaren Zeitfensters eine entsprechende Anpassung des Iststromwerts an den Sollstromwert zu ermöglichen und damit die gewünschte Bewegung des Aktors zu bewirken.

Um bei einer Einwirkung von äußeren Kräften auf den Manipulator das gewünschte elastische oder flexible Verhalten gewährleisten zu können ist ferner vorgesehen, eine Differenz zwischen dem Sollstromwert und dem Iststromwert zu bestimmen und diese Differenz in eine sogenannte erforderliche Positionsabweichung des Aktors gegenüber der vom Bahngenerator vorgegebenen Sollposition umzurechnen. Die erforderliche Positionsabweichung ist dabei so bemessen, dass die mit dem Aktor gekoppelten Manipulatorsegmente und der Aktor trotz der hohen Steifigkeit in der Praxis das gewünschte elastische oder flexible Verhalten aufweisen, um beispielsweise eine Beschädigung des zu handhabenden Werkstücks vollständig oder zumindest weitgehend auszuschließen. Hierzu wird in einem nachfolgenden Schritt die ermittelte erforderliche Positionsabweichung, insbesondere durch einen Additionsvorgang oder einen Subtraktionsvorgang, mit dem vom Bahngenerator an das Aktordynamikmodell zur Verfügung gestellten Sollweg verrechnet, so dass während des nächsten Regelungszyklus eine Ausweichbewegung des Aktors hervorgerufen wird, die in einem vorgebbaren Zusammenhang mit dem Auftreten der äußeren Störkraft steht. Exemplarisch kann vorgesehen sein, dass der Aktor für unterschiedliche Betriebszustände und/oder räumliche Lagen des Manipulators jeweils mit Hilfe des Aktordynamikmodells einstellbare, voneinander unterschiedliche Elastizitätseigenschaften aufweist, wodurch ein zusätzlicher Freiheitsgrad für die Bewegung des Manipulators im Vergleich zu einem Manipulator mit pneumatischen Aktoren geschaffen werden kann. Beispielsweise kann vorgesehen werden, dass der Manipulator in einer ersten räumlichen Lage eine andere Elastizität aufweist als in einer zweiten räumlichen Lage.

Vorteilhafte Weiterbildungen der Erfindung sind in den Unteransprüchen angegeben.

Zweckmäßig ist es, wenn das Aktordynamikmodell zur Berücksichtigung von Wechselwirkungen mehrerer, insbesondere aller, die räumliche Lage des Manipulators bestimmenden elektrischen Aktoren ausgebildet ist und für jeden der elektrischen Aktoren individuelle Soll-Bewegungswerte aus der Gruppe: Sollweg und Sollgeschwindigkeit oder Sollweg und Sollbeschleunigung oder Sollweg und Sollgeschwindigkeit und Sollbeschleunigung zur Verfügung gestellt werden und für jeden der berücksichtigten Aktoren ein individueller Sollstromwertwert berechnet wird, der an einen individuellen Regler weitergleitet wird, um dort unter Einbeziehung eines gemessenen Iststromwerts und einer gemessenen Ist-Position des jeweiligen Aktors einen individuellen Aktorstrom zu ermitteln, wobei eine Differenz zwischen dem Sollstromwert und dem Iststromwert des jeweiligen Aktors in eine Positionsabweichung des Aktors umgerechnet wird, die dem Sollweg zugerechnet wird, um eine Ausweichbewegung des Aktors bei Auftreten einer äußeren Störkraft zu ermöglichen. Wahlweise kann vorgesehen werden, dass für jeden Aktor ein eigenes Aktordynamikmodell bereitgestellt wird oder dass die individuellen Sollstromwerte sequentiell oder parallel in einem gemeinsamen Aktordynamikmodell errechnet werden.

Bei einer vorteilhaften Weiterbildung des Verfahrens ist vorgesehen, dass eine Erfassung des Iststromwerts in der Steuereinrichtung vorgenommen wird, die mit dem Regler verbunden ist oder den Regler beinhaltet und die zur Bereitstellung der elektrischen Energie an den elektrischen Aktor in Abhängigkeit vom Sollstromwert ausgebildet ist. Somit kann auf einen zusätzlichen, beispielsweise unmittelbar am Aktor angeordneten Kraft- oder Drehmomentsensor verzichtet werden. Vorzugsweise umfasst die Steuereinrichtung eine Motorsteuerung oder einen Motorcontroller, die bzw. der dazu ausgebildet ist, ein vom Regler bereitgestelltes Stromsignal in einen tatsächlich an den Aktor bereitzustellenden Strom umzuwandeln und die bzw. der für eine Stromregelung anhand des vom Regler vorgegebenen Stromwerts einen internen Stromaufnehmer, insbesondere einen zum Aktor elektrisch parallelgeschalteten Messwiderstand umfasst, an dem eine vom Strom durch den Aktor abhängige Spannung abfällt, die mit einer geeigneten Spannungsmessvorrichtung ermittelt werden kann oder einen geeignet angeschlossenen Hallsensor.

In weiterer Ausgestaltung des Verfahrens ist vorgesehen, dass für jede räumliche Lage des Manipulators und für jede Aktorposition jedes Aktors anhand des Aktordynamikmodells und der individuellen Soll-Bewegungswerte für den jeweiligen Aktor ein Sollstromwert für eine Haltekraft oder eine Bewegung des jeweiligen Aktors ermittelt wird und an den Regler weitergeleitet wird. In dem Aktordynamikmodell sind sämtliche räumlichen Lagen oder Stellungen der einzelnen Manipulatorglieder, die insbesondere im Rahmen einer vorausgegangenen Simulation ermittelt und gegebenenfalls durch nachfolgende Bewegungen des Manipulators verifiziert wurden, sowie damit verknüpfte Werte für die Haltekraft jedes Aktors in der räumlichen Lage und die zur Beschleunigung des Aktors aus dieser räumlichen Lage gespeichert. Somit kann anhand des Aktordynamikmodells ausgehend von einer bekannten räumlichen Lage und in Kenntnis der gestellten Bewegungsaufgabe, die von einer übergeordneten Steuereinrichtung oder vom Bahngenerator bereitgestellt wird und die vom Bahngenerator verarbeitet und in die Bewegungen der der einzelnen Aktoren zerlegt wird, für jeden Aktor ein Sollstromwert bestimmt werden, der an den Regler weitergeleitet wird. Bei Einbeziehung weiterer Randbedingungen in das Aktordynamikmodell wie beispielsweise einem variablen Gewicht eines vom Manipulator zu bewegenden Werkzeugs wird die Positioniergenauigkeit des Manipulators weiter erhöht.

Vorteilhaft ist es, wenn für die Ermittlung des Sollstromwerts für den jeweiligen Aktor die räumliche Lage und Aktorposition sämtlicher am Manipulator angeordneter und miteinander in Wechselwirkung stehender elektrischer Aktoren berücksichtigt wird. Grundsätzlich ist vorgesehen, dass in allen Steuereinheiten jeweils die gleichen Aktordynamikmodelle und Regler implementiert sind, da hiermit der Aufwand für die Erstellung der erforderlichen Hardware und gegebenenfalls Software, gering gehalten werden kann. Dies gilt insbesondere dann, wenn vom Manipulator ein Gefährdungspotential für das Werkstück und/oder für einen Nutzer oder Bediener ausgeht, da in diesem Fall eine Zertifizierung der Manipulatorfunktionen im Hinblick auf sicherheitstechnische Aspekte erforderlich ist. Wenn in allen Steuereinheiten jeweils die gleiche Elektronik enthalten ist und das gleiche Computerprogramm abläuft, das insbesondere das Aktordynamikmodell und den Regler umfasst, kann die erforderliche Zertifizierung einfach gehalten werden. Sofern der Manipulator eine Vielzahl von Aktoren aufweist, die die räumliche Lage der Manipulatorsegmente bestimmen, kann es vorteilhaft sein, die verschiedenen Aktoren mit zwei oder mehreren unterschiedlich ausgestatteten Steuereinheiten zu versehen, wobei die in den unterschiedlichen Steuereinheiten implementierten Aktordynamikmodelle möglicherweise nur einen Teil, insbesondere nur die jeweils benachbarten Aktoren für die Ermittlung der jeweiligen Bewegungswerte berücksichtigen.

Bevorzugt ist vorgesehen, dass eine Umrechnung der ermittelten Differenz zwischen dem Sollstromwert und dem Iststromwert in die Positionsabweichung des jeweiligen Aktors nur dann vorgenommen wird, wenn die ermittelte Differenz einen vorgebbaren Schwellwert übersteigt. Hiermit wird ein unerwünschtes Aufschwingen des Manipulators vermieden, das ansonsten auftreten könnte, wenn bereits kleinste Differenzen zwischen Sollstromwert und Iststromwert Berücksichtigung finden würden. Dabei kann vorgesehen werden, den Schwellwert in Abhängigkeit von der räumlichen Lage des Manipulators und/oder von einem Betriebszustand für den Manipulator zu verändern.

Bei einer Weiterbildung der Erfindung ist vorgesehen, dass die Umrechnung der ermittelten Differenz zwischen dem Sollstromwert und dem Iststromwert in die Positionsabweichung des jeweiligen Aktors in einer, insbesondere als Abbild eines gedämpften Feder-Masse-Schwinger ausgebildeten, Filterstufe vorgenommen wird, die eine Glättung und/oder Dämpfung des zeitlichen Verlaufs der ermittelten Differenz vornimmt. Diese Maßnahme dient ebenfalls dazu, unerwünschte Schwingungen des Manipulators zu verhindern, wobei ebenfalls vorgesehen sein kann, die Glättung und/oder Dämpfung in Abhängigkeit von der räumlichen Lage des Manipulators und/oder von einem Betriebszustand für den Manipulator zu verändern.

Zweckmäßig ist es, wenn mehreren, insbesondere allen, Aktoren jeweils eine Steuereinrichtung zugeordnet ist, in der der Sollstromwert für den jeweiligen Aktor anhand des Aktordynamikmodells, das zur Berücksichtigung von Wechselwirkungen mehrerer, insbesondere aller, am Manipulator angeordneter elektrischer Aktoren ausgebildet ist, unter Verwendung des gemessenen Iststromwerts und der gemessenen Ist-Position des jeweiligen Aktors ermittelt wird. Durch diese dezentrale Anordnung der Steuereinrichtungen werden Signallaufzeiten, die bei der Übertragung von Ist-Positionen und Iststromwerten an eine zentrale Steuereinrichtung auftreten könnten, zumindest weitgehend vermieden. Dadurch kann ein besonders schnelles Reagieren der Aktoren auf äußere Störkräfte gewährleistet werden.

Bei einer alternativen Ausführungsform der Erfindung ist vorgesehen, dass mehreren, insbesondere allen, Aktoren jeweils eine Steuereinrichtung zugeordnet ist, in der der Sollstromwert für den jeweiligen Aktor anhand des Aktordynamikmodells, das zur Berücksichtigung von Wechselwirkungen mehrerer, insbesondere aller, am Manipulator angeordneter elektrischer Aktoren ausgebildet ist, unter Einbeziehung aller gemessenen Istströme und aller gemessenen Ist-Positionen der am Manipulator angeordneten elektrischen Aktoren ermittelt wird. Hierdurch wird eine besonders präzise Regelung der einzelnen Aktoren ermöglicht, da stets sämtliche Informationen, die von den anderen Aktoren bekannt sind, in das Aktordynamikmodell mit einbezogen werden und für die Berechnung jedes individuellen Sollstromwerts berücksichtigt werden.

Besonders vorteilhaft ist es, wenn ein Vergleich von Sollströmen für einen Aktor vorgenommen wird, die von verschiedenen Steuereinrichtungen für eine gegebene Bewegungssituation der eine räumliche Lage des Manipulators bestimmenden Aktoren ermittelt wurden. Hierdurch kann eine Überwachung der Steuereinrichtungen realisiert werden, um beispielsweise bei Vorliegen einer Differenz zwischen zwei Sollströmen, die von verschiedenen Steuereinrichtungen ermittelt wurden, eine Abschaltung des Manipulators oder zumindest eine Ausgabe einer Fehlermeldung zu bewirken, um einem Benutzer darauf hinzuweisen, dass möglicherweise eine Fehlfunktion wenigstens einer der Steuereinrichtungen vorliegt.

Das erfindungsgemäße Verfahren wird anhand der Zeichnung erläutert. Hierbei zeigt:
- Figur 1: eine schematische Darstellung eines mehrgliedrigen Manipulators mit mehreren Aktoren und zugeordneten Steuereinrichtungen und
- Figur 2: eine schematische Fließdarstellung des erfindungsgemäßen Verfahrens.

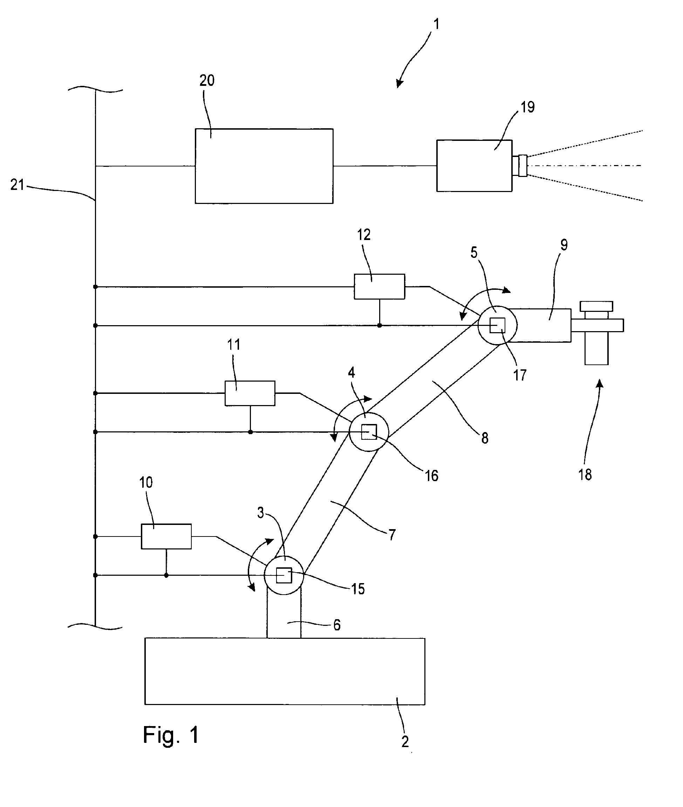

Ein in der Figur 1 dargestellter mehrgliedriger Manipulator 1 ist exemplarisch ortsfest an einem Fundament 2 festgelegt und umfasst drei als Drehantriebe ausgebildete elektrische Aktoren 3, 4 und 5. Die elektrischen Aktoren 3, 4 und 5 bilden jeweils Schwenkgelenke zwischen Manipulatorgliedern 6, 7, 8 und 9 und ermöglichen jeweils eine rotatorische Relativbewegung benachbarter Manipulatorglieder 6 und 7, 7 und 8, 8 und 9 in der Darstellungsebene der Figur 1. Exemplarisch sind die elektrischen Aktoren 3, 4 und 5 in nicht näher dargestellter Weise als Getriebemotoren ausgeführt und werden jeweils von einer zugeordneten Steuereinheit 10, 11 und 12 mit elektrischer Energie von einer nicht dargestellten Energiequelle versorgt. Jedem der elektrischen Aktoren 3, 4 und 5 ist jeweils ein Sensor 15, 16 und 17 zur Ermittlung einer relativen Winkelstellung der jeweils schwenkbeweglich miteinander verbundenen Manipulatorglieder 6 und 7, 7 und 8, 8 und 9 zugeordnet. Bei diesem Sensor 15, 16 und 17 kann es sich beispielsweise um einen Drehwinkelsensor handeln. Am freien Ende des Manipulators 1 und somit am Manipulatorglied 9 ist exemplarisch ein Greifer 18 angeordnet, der zum Ergreifen eines nicht näher bezeichneten Gegenstands ausgebildet ist mit dem beispielsweise eine automatisierte Beförderung derartiger Behälter zwischen einer nicht dargestellten Aufnahmeposition und einer ebenfalls nicht dargestellten Absetzposition vorgenommen werden kann.

Um eine korrekte Positionierung des Greifers 18 an der nicht dargestellten Aufnahmeposition zu gewährleisten, kann eine Kamera 19 vorgesehen werden, die derart eingerichtet ist, dass sie sowohl das den Greifer 18 als auch die Aufnahmeposition oder die Absetzposition für den Gegenstand optisch erfassen kann. Mit Hilfe einer im Bahngenerator 20 ausgebildeten Bildverarbeitung wird anhand des von der Kamera 19 erfassten Kamerabilds eine Abstandsbestimmung zwischen Greifer 18 und Gegenstand ermöglicht. Aus dieser Abstandsbestimmung, die beispielsweise in Vektornotation bereitgestellt werden kann, errechnet der Bahngenerator 20 die Bewegungsbahn für den Greifer 18, um beispielsweise den Greifer 18 aus einer Ruheposition in eine Greifposition oder aus der Greifposition in die Ruheposition zu verfahren. Hierzu löst der Bahngenerator 20 die Bewegungsbahn für jeden der Aktoren 3, 4 und 5 in einzelne Soll-Bewegungswerte wie beispielsweise: Sollweg, Sollgeschwindigkeit und Sollbeschleunigung, auf.

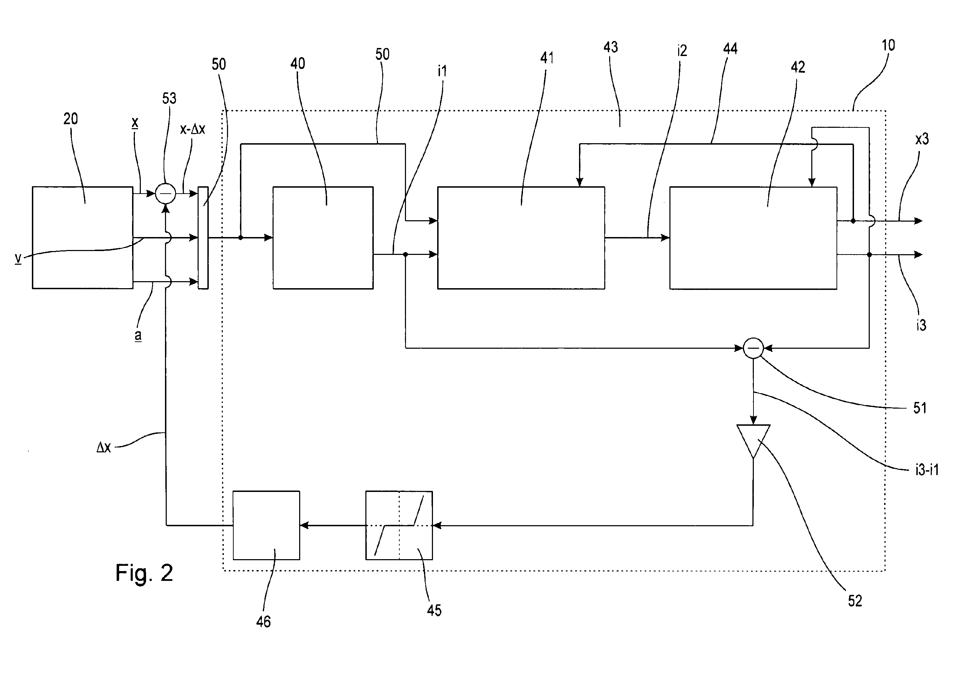

Diese Soll-Bewegungswerte werden anschließend vom Bahngenerator 20 über ein Bussystem 21 ausgegeben, über das der Bahngenerator 20 mit den Steuereinheiten 10, 11 und 12 und mit den Sensoren 15, 16 und 17 elektrisch verbunden ist, wie dies der Figur 2 entnommen werden kann. Das Bussystem 21 ermöglicht eine vorzugsweise bidirektionale Datenübertragung zwischen dem Bahngenerator und den Steuereinheiten 10, 11 und 12 und eine wahlweise unidirektionale oder bidirektionale Datenübertragung zwischen den Sensoren 15, 16 und 17 und dem Bahngenerator 20. Ferner ist vorgesehen, dass über das Bussystem 21 auch eine unmittelbare Datenübertragung zwischen den Sensoren 15, 16 und 17 und den jeweils zugeordneten Steuereinheiten 10, 11 und 12 der jeweiligen elektrischen Aktoren 3, 4 und 5 stattfindet, um eine direkte Rückmeldung zwischen einer ermittelten Stellung des jeweiligen Aktors 3, 4 und 5 und den zugeordneten Steuereinheit 10, 11 und 12 zu ermöglichen. Alternativ zum dargestellten Bussystem kann auch eine Einzelverdrahtung der Komponenten vorgesehen sein.

Die Steuereinheiten 10, 11 und 12 sind vorzugsweise gleichartig aufgebaut und weisen exemplarisch eine in der Figur 2 schematisch dargestellte Funktionsweise auf. Hierzu sind sie exemplarisch jeweils mit identischen Computerprogrammen ausgerüstet, die insbesondere das Aktordynamikmodell und den Regler umfassen.

Exemplarisch ist vorgesehen, dass vom Bahngenerator 20 die Bewegungswerte: Sollweg x, Sollgeschwindigkeit v und Sollbeschleunigung a als Wertegruppe 50 an das Aktordynamikmodell 40 bereitgestellt werden. Das Aktordynamikmodell 40 basiert auf einer Simulation, bei der zu jeder Stellung des Manipulators 1 und für jeden der Aktoren 3, 4 und 5 Antriebskräfte bzw. Antriebsmomente und daraus resultierende elektrische Sollströme für ein Halten des Manipulators 1 in der jeweiligen Stellung sowie für Bewegungen des Manipulators 1 mit vorgebbaren Beschleunigungen in unterschiedliche Raumrichtungen, gegebenenfalls unter Einbeziehung der Bewegungen weiterer oder sämtlicher Aktoren 3, 4 und 5, aus der jeweiligen räumlichen Stellung des Manipulators 1 gespeichert sind. Somit ist das Aktordynamikmodell 40 dazu eingerichtet, für den jeweils zugeordneten Aktor 3, 4 oder 5 in Abhängigkeit von der vom Bahngenerator 20 für diesen Aktor 3, 4 oder 5 oder für die Aktoren 3, 4 oder 5 vorgegebenen Wertegruppe 50, insbesondere der Beschleunigung bzw. der Beschleunigungen, einen elektrischen Sollstrom i1 als Sollstromwert zu ermitteln, der in einem nachfolgenden Schritt an den Regler 41 weitergeleitet wird. Ferner ist exemplarisch vorgesehen, die Wertegruppe 50, insbesondere mit den Bewegungswerten: Sollweg x, Sollgeschwindigkeit v und Sollbeschleunigung a direkt vom Bahngenerator 20 an den Regler 41 bereitzustellen. Durch diese Informationen wird der Regler 41 in die Lage versetzt, die vom Bahngenerator 20 angeforderte Bewegung des jeweils zugeordneten Aktors 3, 4 oder 5 unter Einbeziehung des durch den jeweiligen Aktor 3, 4 oder 5 fließenden Stroms so zu regeln, dass diese möglichst verzögerungsfrei der angeforderten Bewegung entspricht. Hierzu ist vorgesehen, dass der Regler 41 eine Stromanforderung i2 an den Antrieb 42, der eine auch als Motorcontroller bezeichnete Motorsteuerung sowie die zugeordneten Aktoren 3, 4 oder 5 umfassen kann, bereitstellt. Im Antrieb 42 findet m diese Stromanforderung i2 in einen tatsächlichen Stromfluss i3 umgewandelt wird, der an den jeweils zugeordneten Aktor 3, 4 oder 5 bereitzustellen ist. Exemplarisch findet im Antrieb 42 auch eine Ermittlung des tatsächlichen Stromflusses i3 oder Istromwerts im jeweiligen Aktor 3, 4 oder 5 mittels eines nicht näher dargestellten Stromessgeräts statt, in dem ein Stromflusssensor integriert ist, so dass kein zusätzlicher Sensor für den Stromfluss erforderlich ist.

Der tatsächliche Stromfluss i3 wird über die Messleitung 43 an den Antrieb 42 rückgekoppelt. Ferner wird über die Messleitung 44 die vom jeweils zugeordneten Sensor 15, 16 oder 17 ermittelte räumliche Lage oder Ist-Position x3 der zueinander benachbarten und beweglich miteinander verbundenen Manipulatorglieder 6, 7, 8, 9 ebenfalls an den Regler 41 übertragen.

Darüber hinaus findet auf Basis des vom Antrieb 42 ermittelten Iststromwerts i3 sowie des vom Aktordynamikmodell 40 errechneten Sollstromwerts i1 in einem Berechnungsmodul 51 eine mathematische Operation statt, mit deren Hilfe auf eine Störkraft geschlossen werden soll, die auf den Manipulator 1 einwirkt. Exemplarisch handelt es sich bei der mathematischen Operation um eine Differenzbildung zwischen dem Iststromwert i3 und dem Sollstromwert i1. Die hierbei zu Grunde liegende Überlegung beruht darauf, dass der Iststromwert i3 die tatsächlich am jeweiligen Aktor 3, 4 oder 5 vorliegende Situation widerspiegelt, also beispielsweise bei Fehlen einer Störkraft exakt dem Sollstromwert i1 entspricht. Bei Vorhandensein einer Störkraft wird aufgrund der Regelungsvorgänge der durch den Regler 41, den Antrieb 42 und den jeweils zugeordneten Aktor 3, 4 oder 5 gebildeten Regelschleife eine Abweichung vom Sollstromwert i1 hervorgerufen, die die Störkraft repräsentiert.

Das Ergebnis der mathematischen Operation wird exemplarisch einem Schwellwertfilter 45 zugeführt, der dazu vorgesehen ist, kleinere Schwingungen des Manipulators 1 oder einzelner Aktoren 3, 4 oder 5 auszufiltern, um ein unerwünschtes Aufschwingen des Manipulators 1 zu vermeiden. Sofern ein Ergebnis der mathematischen Operation größer als ein im Schwellwertfilter 45 hinterlegter Schwellwert ist, wird das entsprechende Ergebnis der mathematischen Operation einem Wandlermodul 46 zugeführt. In dem Wandlermodul 46 ist exemplarisch eine mathematische Übertragungsfunktion, insbesondere ein PT2-Glied, implementiert. Mit Hilfe dieser Übertragungsfunktion wird das Ergebnis der mathematischen Operation beispielsweise in eine Positionsabweichung Δx umgewandelt. Anschließend ist vorgesehen, die ermittelte Positionsabweichung Δx mit dem vom Bahngenerator 20 ermittelten Sollweg x mathematisch zu verknüpfen, beispielsweise durch Differenzbildung. Dadurch wird eine Rückkopplung der auf den Manipulator 1 eingekoppelten Störkraft in die durch den das Aktordynamikmodell 40, den Regler 41, den Antrieb 42 und den jeweils zugeordneten Aktor 3, 4 oder 5 gebildete Regelschleife ermöglicht.

Dementsprechend kommt es zu einer Modifikation des Sollwegs x in Abhängigkeit von einer auf den Manipulator 1 einwirkenden Störkraft, wobei diese Modifikation derart in die Regelschleife eingespeist wird, dass der Manipulator 1 in der Art eines mit pneumatischen Aktoren ausgerüsteten Manipulators in flexibler oder elastischer Weise ausweichen kann, ohne dass hierfür zwischen den im Wesentlichen starren elektrischen Aktoren 3, 4 und 5 und den jeweils zugeordneten Manipulatorgliedern 6, 7, 8 und 9 elastische oder flexible Zwischenglieder erforderlich sind, die die Positioniergenauigkeit des Manipulators 1 negativ beeinflussen könnten. Dies ist insbesondere dann von Bedeutung, wenn der Manipulator 1 für Bewegungsaufgaben eingesetzt werden soll, bei denen beispielsweise flexible Werkstücke bewegt werden sollen oder bei denen unvorhersehbare Reaktion auf Bewegungen des Manipulators 1 eintreten können.

Ergänzend kann vorgesehen werden, dass mit Hilfe eines weiteren, nicht dargestellten Wandlermoduls, in dem ebenfalls eine mathematische Übertragungsfunktion implementiert ist, eine Geschwindigkeitsabweichung ermittelt wird, die mit dem vom Bahngenerator 20 ermittelten Bewegungswert "Sollgeschwindigkeit" mathematisch verknüpft werden kann, beispielsweise durch Differenzbildung, um hiermit eine Rückkopplung der auf den Manipulator eingekoppelten Störkraft in die durch den das Aktordynamikmodell 40, den Regler 41, den Antrieb 42 und den jeweils zugeordneten Aktor 3, 4 oder 5 gebildete Regelschleife zu verbessern.

Bei einer nicht dargestellten Ausführungsform sind die Aktoren mit einer zentralen Steuereinheit verbunden, die für eine zentrale Bereitstellung der Sollströme für sämtliche der Aktoren ausgebildet ist. Der Vorteil einer solchen zentralen Steuereinheit liegt darin, dass eine Koordination der Bewegungen der einzelnen Aktoren in besonders einfacher Weise erfolgen kann. Demgegenüber ist es bei einer verteilten Anordnung der Aktoren, insbesondere an einem Manipulator mit einer Vielzahl von Manipulatorgliedern, vorteilhaft, eine unmittelbare Zuordnung von Steuereinheiten an die jeweiligen Aktoren oder gegebenenfalls an Gruppen von Aktoren vorzusehen. Hierdurch kann eine besonders rasche Reaktion des jeweiligen Aktors auf ein Auftreten von Störkräften gewährleistet werden, wobei die jeweiligen Steuereinheiten wahlweise mit den Sensorinformationen, insbesondere Positions- und Stromflusswerten, sämtlicher Aktoren oder nur mit den Sensorinformationen des jeweils zugeordneten Aktors oder der zugeordneten Gruppe von Aktoren versorgt wird.

## Patentansprüche

1. Verfahren zum Betreiben eines mehrgliedrigen Manipulators (1), der wenigstens einen elektrischen Aktor (3, 4, 5) zur Einleitung einer Relativbewegung auf einander benachbarte Manipulatorglieder (6, 7, 8, 9) umfasst, wobei dem wenigstens einen Aktor (3, 4, 5) eine Steuereinrichtung (10, 11, 12) für eine geregelte Energiezufuhr an den Aktor (3, 4, 5) zugeordnet ist, mit den Schritten: Bereitstellen von Soll-Bewegungswerten aus der Gruppe: Sollweg und Sollgeschwindigkeit oder Sollweg und Sollbeschleunigung oder Sollweg und Sollgeschwindigkeit und Sollbeschleunigung für den Aktor (3, 4, 5) an ein Aktordynamikmodell (40) und Ermitteln eines elektrischen Sollstromwertwerts für den Aktor (3, 4, 5) im Aktordynamikmodell (40), um die vorgegebenen SollBewegungswerte zu erreichen, Weiterleiten des Sollstromwertwerts oder des Sollstromwerts und der Soll-Bewegungswerte an einen Regler (41), der unter Einbeziehung des Sollstromwertwerts sowie eines gemessenen Iststromwerts und einer gemessenen Ist-Position des Aktors (3, 4, 5) zur Ausgabe eines Aktorstroms an den Aktor (3, 4, 5) ausgebildet ist, wobei eine Differenz zwischen dem Sollstromwertwert und dem Iststromwert ermittelt und in eine erforderliche Positionsabweichung des Aktors (3, 4, 5) umgerechnet wird, und dass die ermittelte erforderliche Positionsabweichung dem in das Aktordynamikmodell (40) eingespeisten Sollweg zugerechnet wird, um eine Ausweichbewegung des wenigstens eines Manipulatorglieds (6, 7, 8, 9) koordiniert für wenigstens einen Aktor (3, 4, 5) bei Auftreten einer äußeren Störkraft zu ermöglichen.

2. Verfahren nach Anspruch 1, **dadurch gekennzeichnet, dass** das Aktordynamikmodell (40) zur Berücksichtigung von Wechselwirkungen mehrerer, insbesondere aller, die räumliche Lage des Manipulators (1) bestimmenden elektrischen Aktoren (3, 4, 5) ausgebildet ist und für jeden der elektrischen Aktoren (3, 4, 5) individuelle Soll-Bewegungswerte aus der Gruppe: Sollweg und Sollgeschwindigkeit oder Sollweg und Sollbeschleunigung oder Sollweg und Sollgeschwindigkeit und Sollbeschleunigung zur Verfügung gestellt werden und für jeden der berücksichtigten Aktoren (3, 4, 5) ein individueller Sollstromwertwert berechnet wird, der an einen individuellen Regler (41) weitergleitet wird, um dort unter Einbeziehung eines gemessenen Iststromwerts und einer gemessenen Ist-Position des jeweiligen Aktors (3, 4, 5) einen individuellen Aktorstrom zu ermitteln, wobei eine Differenz zwischen dem Sollstromwert und dem Iststromwert des jeweiligen Aktors (3, 4, 5) in eine Positionsabweichung des Aktors (3, 4, 5) umgerechnet wird, die dem Sollweg zugerechnet wird, um eine Ausweichbewegung des Aktors (3, 4, 5) bei Auftreten einer äußeren Störkraft zu ermöglichen.

3. Verfahren nach Anspruch 1 oder 2, **dadurch gekennzeichnet, dass** eine Erfassung des Iststromwerts in der Steuereinrichtung (10, 11, 12) vorgenommen wird, die mit dem Regler (41) verbunden ist oder den Regler (41) beinhaltet und die zur Bereitstellung der elektrischen Energie an den elektrischen Aktor (3, 4, 5) in Abhängigkeit vom Sollstromwert ausgebildet ist.

4. Verfahren nach Anspruch 1, 2 oder 3, **dadurch gekennzeichnet, dass** für jede räumliche Lage des Manipulators (1) und für jede Aktorposition jedes Aktors (3, 4, 5) anhand des Aktordynamikmodells (40) und der individuellen Soll-Bewegungswerte für den jeweiligen Aktor (3, 4, 5) ein Sollstromwert für eine Haltekraft oder eine Bewegung des jeweiligen Aktors (3, 4, 5) ermittelt wird und an den Regler (41) weitergeleitet wird.

5. Verfahren nach einem der vorhergehenden Ansprüche, **dadurch gekennzeichnet, dass** für die Ermittlung des Sollstromwerts für den jeweiligen Aktor (3, 4, 5) die räumliche Lage und Aktorposition sämtlicher am Manipulator (1) angeordneter und miteinander in Wechselwirkung stehender elektrischer Aktoren (3, 4, 5) berücksichtigt wird.

6. Verfahren nach einem der vorhergehenden Ansprüche, **dadurch gekennzeichnet, dass** eine Umrechnung der ermittelten Differenz zwischen dem Sollstromwert und dem Iststromwert in die Positionsabweichung des jeweiligen Aktors (3, 4, 5) nur dann vorgenommen wird, wenn die ermittelte Differenz einen vorgebbaren Schwellwert übersteigt.

7. Verfahren nach einem der vorhergehenden Ansprüche, **dadurch gekennzeichnet, dass** die Umrechnung der ermittelten Differenz zwischen dem Sollstromwert und dem Iststromwert in die Positionsabweichung des jeweiligen Aktors (3, 4, 5) in einer, insbesondere als Abbild eines gedämpften Feder-Masse-Schwingers ausgebildeten, Filterstufe (46) vorgenommen wird, die eine Glättung und/oder Dämpfung des zeitlichen Verlaufs der ermittelten Differenz vornimmt.

8. Verfahren nach einem der vorhergehenden Ansprüche, **dadurch gekennzeichnet, dass** mehreren, insbesondere allen, Aktoren (3, 4, 5) jeweils eine Steuereinrichtung (10, 11, 12) zugeordnet ist, in der der Sollstromwert für den jeweiligen Aktor (3, 4, 5) anhand des Aktordynamikmodells (40), das zur Berücksichtigung von Wechselwirkungen mehrerer, insbesondere aller, am Manipulator (1) angeordneter elektrischer Aktoren (3, 4, 5) ausgebildet ist, unter Verwendung des gemessenen Iststromwerts und der gemessenen Ist-Position des jeweiligen Aktors (3, 4, 5) ermittelt wird.

9. Verfahren nach Anspruch 1, **dadurch gekennzeichnet, dass** mehreren, insbesondere allen, Aktoren (3, 4, 5) jeweils eine Steuereinrichtung (10, 11, 12) zugeordnet ist, in der der Sollstromwert für den jeweiligen Aktor (3, 4, 5) anhand des Aktordynamikmodells (40), das zur Berücksichtigung von Wechselwirkungen mehrerer, insbesondere aller, am Manipulator (1) angeordneter elektrischer Aktoren (3, 4, 5) ausgebildet ist, unter Einbeziehung aller gemessenen Istströme und aller gemessenen Ist-Positionen der am Manipulator (1) angeordneten elektrischen Aktoren (3, 4, 5) ermittelt wird.

10. Verfahren nach Anspruch 8 oder 9, **dadurch gekennzeichnet, dass** ein Vergleich von Sollströmen für einen Aktor (3, 4, 5) vorgenommen wird, die von verschiedenen Steuereinrichtungen (10, 11, 12) für eine gegebene Bewegungssituation der eine räumliche Lage des Manipulators (1) bestimmenden Aktoren (3, 4, 5) ermittelt wurden.
